# EUROPEAN PATENT APPLICATION

(11) **EP 4 826 621 A1**
(43) Date of publication of application: **21.10.2026**
(21) Application number: 26169523.3
(22) Date of filing: 31.03.2026
(51) Int. Cl.: G06Q 10/10, G06Q 30/016

(54) **SYSTEMS AND METHODS FOR DYNAMIC GENERATION OF TROUBLESHOOTING FLOWS USING RESOLUTIONS EXTRACTED FROM SERVICE TICKETS**

(30) Priority: 18.04.2025 US 202519183333
(71) Applicant: AUTOMATION ANYWHERE, INC., San Jose, CA 95134 (US)
(72) Inventor: SUDHAKAR, Muddu, Saratoga (US); NUCCI, Antonio, San Jose (US); TRYFONAS, Christos, Foster City (US); AMRADKAR, Purushottam, Sammamish (US)
(74) Representative: Studio Torta S.p.A.

(57) **Abstract**

Described herein are methods, systems, and media for dynamically troubleshooting an unresolved service ticket comprising an offline processing pipeline configured to perform at least: ingesting a plurality of closed service tickets; grouping the closed service tickets; extracting a ticket object from each closed service ticket in each group; generating a document for each group using the group ticket objects; and indexing the document; and a real-time execution pipeline configured to perform at least: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow.

## Description

### CROSS-REFERENCE

This application claims the benefit of U.S. Application No. 19/183,333, filed April 18, 2025.

### BACKGROUND

Generative artificial intelligence (AI) is artificial intelligence capable of generating text, images, or other media, using generative models. Advances in transformer-based deep neural networks have enabled a number of generative AI systems notable for accepting natural language prompts as input. One such type of model, a large language model (LLM), is a deep learning algorithm that can recognize, summarize, translate, predict and generate text and other forms of content based on knowledge gained from massive datasets. LLMs cans improve enterprise operations, making them more efficient, accurate, and personalized.

### SUMMARY

Described herein are solutions to a long-standing technical problem in customer service environments: How to dynamically troubleshoot an unresolved service ticket? The system described is designed to address the limitations of current practices, where service agents may lack the necessary training, documentation, or experience to effectively resolve issues. This often leads to prolonged open ticket status, causing customer dissatisfaction, and inefficiencies in service delivery.

One innovative aspect of this system lies in its ability to automatically extract, group, and utilize information from successfully closed tickets. This information includes the issue, root cause, and resolution, which are grouped based on similarity and used to dynamically generate a troubleshooting flow. This flow can be executed in real-time, providing service agents with a streamlined and efficient method of resolving customer issues.

The described system optionally presents the troubleshooting flow in two formats: a carousel of answer cards or an immersive conversational flow. The carousel format provides the user with a series of potential root causes and corresponding resolutions (starting from the most likely resolution), while the conversational flow engages the user in a dialogue to identify the most likely root cause before suggesting a resolution.

The system's ability to present the troubleshooting flow in two different formats is another innovative feature. The carousel of answer cards provides a quick and easy way for service agents to identify potential root causes and corresponding resolutions. Each card contains a concise summary of the issue, root cause, and resolution, allowing the agent to quickly assess the relevance of each card to the current issue. On the other hand, the immersive conversational flow provides a more interactive and engaging experience for the service agent. This format uses a dialogue-based approach to identify the most likely root cause of the issue. In some cases, the system asks a series of questions, each one designed to narrow down the possible root causes. Once the most likely root cause has been identified, in such cases, the system provides the corresponding resolution.

In one aspect, disclosed herein are computer-implemented methods for dynamically troubleshooting an unresolved service ticket comprising: providing an offline processing pipeline configured to perform at least: ingesting a plurality of closed service tickets; grouping the closed service tickets; extracting a ticket object from each closed service ticket in each group; generating a document for each group using the group ticket objects; and indexing the document; and providing a real-time execution pipeline configured to perform at least: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow. In some embodiments, the offline processing pipeline comprises an automated software pipeline. In further embodiments, the offline processing pipeline performs operations offline, out-of-band, and/or not in real-time. In some embodiments, the real-time execution pipeline comprises an automated software pipeline. In further embodiments, the real-time execution pipeline performs operations online, in-band, and/or in real-time. In still further embodiments, the real-time execution pipeline is triggered to perform operations by a service agent encountering a new open service ticket. In some embodiments, the closed service tickets are grouped by similarity. In further embodiments, the closed service tickets are grouped by association with a particular product line. In some embodiments, each group comprises a grouping criteria label and a grouping criterial value. In some embodiments, the extracting a ticket object is performed by a large language model (LLM). In some embodiments, each ticket object comprises one or more issues, one or more resolutions, and one or more root causes. In some embodiments, generating a document for each group comprises removing duplicate ticket objects. In some embodiments, the document is a frequently asked questions (FAQ) document. In some embodiments, the generating a document for each group is performed by a large language model (LLM). In some embodiments, the indexing comprises retrieval-augmented generation (RAG) indexing. In some embodiments, the extracting at least one issue from the open service ticket is performed by a large language model (LLM). In some embodiments, the extracting at least one issue comprises an associated product name. In some embodiments, the real-time execution pipeline is further configured to perform retrieving all relevant chunks from the relevant indexed document utilizing a RAG information retrieval system. In some embodiments, the generating a troubleshooting answer list is performed by a large language model (LLM). In some embodiments, the generating a conversational flow is performed by a large language model (LLM). In some embodiments, the troubleshooting flow is presented in a format comprising a carousel of answer cards. In further embodiments, each card comprises a concise summary of the issue, at least one root cause, and at least one corresponding resolution. In still further embodiments, wherein the carousel provides a most likely root cause and a corresponding resolution first. In some embodiments, the troubleshooting flow is presented in a format comprising an immersive conversational flow. In further embodiments, wherein the immersive conversational flow comprises a series of questions each designed to narrow the possible root causes. In still further embodiments, the immersive conversational flow engages the user in a dialogue to identify the most likely root cause before suggesting a resolution.

In another aspect, disclosed herein are computer-implemented systems for dynamically troubleshooting an unresolved service ticket comprising at least one processor and instructions causing the at least one processor to perform operations comprising: in an offline processing pipeline, performing at least: ingesting a plurality of closed service tickets; grouping the closed service tickets; extracting a ticket object from each closed service ticket in each group; generating a document for each group using the group ticket objects; and indexing the document; and in a real-time execution pipeline, performing at least: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow. In some embodiments, the offline processing pipeline comprises an automated software pipeline. In further embodiments, the offline processing pipeline performs operations offline, out-of-band, and/or not in real-time. In some embodiments, the real-time execution pipeline comprises an automated software pipeline. In further embodiments, the real-time execution pipeline performs operations online, in-band, and/or in real-time. In still further embodiments, the real-time execution pipeline is triggered to perform operations by a service agent encountering a new open service ticket. In some embodiments, the closed service tickets are grouped by similarity. In further embodiments, the closed service tickets are grouped by association with a particular product line. In some embodiments, each group comprises a grouping criteria label and a grouping criterial value. In some embodiments, the extracting a ticket object is performed by a large language model (LLM). In some embodiments, each ticket object comprises one or more issues, one or more resolutions, and one or more root causes. In some embodiments, generating a document for each group comprises removing duplicate ticket objects. In some embodiments, the document is a frequently asked questions (FAQ) document. In some embodiments, the generating a document for each group is performed by a large language model (LLM). In some embodiments, the indexing comprises retrieval-augmented generation (RAG) indexing. In some embodiments, the extracting at least one issue from the open service ticket is performed by a large language model (LLM). In some embodiments, the extracting at least one issue comprises an associated product name. In some embodiments, the real-time execution pipeline is further configured to perform retrieving all relevant chunks from the relevant indexed document utilizing a RAG information retrieval system. In some embodiments, the generating a troubleshooting answer list is performed by a large language model (LLM). In some embodiments, the generating a conversational flow is performed by a large language model (LLM). In some embodiments, the troubleshooting flow is presented in a format comprising a carousel of answer cards. In further embodiments, each card comprises a concise summary of the issue, at least one root cause, and at least one corresponding resolution. In still further embodiments, the carousel provides a most likely root cause and a corresponding resolution first. In some embodiments, the troubleshooting flow is presented in a format comprising an immersive conversational flow. In further embodiments, the immersive conversational flow comprises a series of questions each designed to narrow the possible root causes. In still further embodiments, the immersive conversational flow engages the user in a dialogue to identify the most likely root cause before suggesting a resolution.

In yet another aspect, disclosed herein are one or more non-transitory computer-readable storage media encoded with instructions executable by one or more processors to provide an application comprising: an offline pipeline configured to perform processing operations comprising: ingesting a plurality of closed service tickets; grouping the closed service tickets; extracting a ticket object from each closed service ticket in each group; generating a document for each group using the group ticket objects; and indexing the document; and a real-time pipeline configured to perform execution operations comprising: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow.

### BRIEF DESCRIPTION OF THE DRAWINGS

The novel features of the disclosure are set forth with particularity in the appended claims. A better understanding of the features and advantages of the present disclosure will be obtained by reference to the following detailed description that sets forth illustrative embodiments, in which the principles of the disclosure are utilized, and the accompanying drawings of which:
**FIG. 1** shows a non-limiting example of a computing device; in this case, a device with one or more processors, memory, storage, and a network interface, per one or more embodiments herein;
**FIG. 2** shows a first diagram of an exemplary technology stack, per one or more embodiments herein;
**FIG. 3** shows a second diagram of an exemplary technology stack; in this case, a technology stack with large language model (LLM) emphasis;
**FIG. 4** shows a diagram of an exemplary method of prompt registration configured at an admin console through an LLM gateway, per one or more embodiments herein;
**FIG. 5** shows a non-limiting example of a graphic user interface (GUI); in this case, a GUI for an admin console showing artificial intelligence (AI) service desk features;
**FIG. 6** shows a non-limiting example of a GUI; in this case, a GUI for an admin console showing AI ops desk features;
**FIG. 7** shows a non-limiting example of a GUI; in this case, a GUI for an admin console showing AI support intelligence features;
**FIG. 8** shows a non-limiting example of a schematic diagram of a logical architecture; in this case, a logical architecture including an offline processing pipeline and a real-time processing pipeline;
**FIG. 9** shows a first non-limiting example of dynamic generation of a troubleshooting flow; in this case, a troubleshooting flow organized as a sequence of answer cards; and
**FIG. 10** shows a second non-limiting example of dynamic generation of a troubleshooting flow; in this case, a troubleshooting flow organized as a conversation.

### DETAILED DESCRIPTION

Described herein, in certain embodiments, are computer-implemented methods for dynamically troubleshooting an unresolved service ticket comprising: providing an offline processing pipeline configured to perform at least: ingesting a plurality of closed service tickets; grouping the closed service tickets; extracting a ticket object from each closed service ticket in each group; generating a document for each group using the group ticket objects; and indexing the document; and providing a real-time execution pipeline configured to perform at least: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow.

Also described herein, in certain embodiments, are computer-implemented systems for dynamically troubleshooting an unresolved service ticket comprising at least one processor and instructions causing the at least one processor to perform operations comprising: in an offline processing pipeline, performing at least: ingesting a plurality of closed service tickets; grouping the closed service tickets; extracting a ticket object from each closed service ticket in each group; generating a document for each group using the group ticket objects; and indexing the document; and in a real-time execution pipeline, performing at least: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow.

Also described herein, in certain embodiments, are one or more non-transitory computer-readable storage media encoded with instructions executable by one or more processors to provide an application comprising: an offline pipeline configured to perform processing operations comprising: ingesting a plurality of closed service tickets; grouping the closed service tickets; extracting a ticket object from each closed service ticket in each group; generating a document for each group using the group ticket objects; and indexing the document; and a real-time pipeline configured to perform execution operations comprising: receiving an open service ticket; extracting at least one issue from the open service ticket; identifying a relevant indexed document; extracting all relevant ticket objects from the relevant indexed document using the issue from the open service ticket; dynamically generating a troubleshooting answer list and conversational flow utilizing the relevant ticket objects; and presenting the troubleshooting flow.

### Terms and Definitions

Unless otherwise defined, all technical terms used herein have the same meaning as commonly understood by one of ordinary skill in the art to which this disclosure belongs.

As used herein, the singular forms "a," "an," and "the" include plural references unless the context clearly dictates otherwise. Any reference to "or" herein is intended to encompass "and/or" unless otherwise stated.

As used herein, the term "about" in some cases refers to an amount that is approximately the stated amount, in some cases near the stated amount by 10%, 5%, or 1%, including increments therein, and in some cases, in reference to a percentage, refers to an amount that is greater or less the stated percentage by 10%, 5%, or 1%, including increments therein.

As used herein, the phrases "at least one," "one or more," and "and/or" are open-ended expressions that are both conjunctive and disjunctive in operation. For example, each of the expressions "at least one of A, B and C," "at least one of A, B, or C," "one or more of A, B, and C", "one or more of A, B, or C" and "A, B, and/or C" means A alone, B alone, C alone, A and B together, A and C together, B and C together, or A, B and C together.

Reference throughout this specification to "some embodiments," "further embodiments," or "a particular embodiment," means that a particular feature, structure, or characteristic described in connection with the embodiment is included in at least one embodiment. Thus, the appearances of the phrase "in some embodiments," or "in further embodiments," or "in a particular embodiment" in various places throughout this specification are not necessarily all referring to the same embodiment. Furthermore, the particular features, structures, or characteristics may be combined in any suitable manner in one or more embodiments.

### Computing Systems

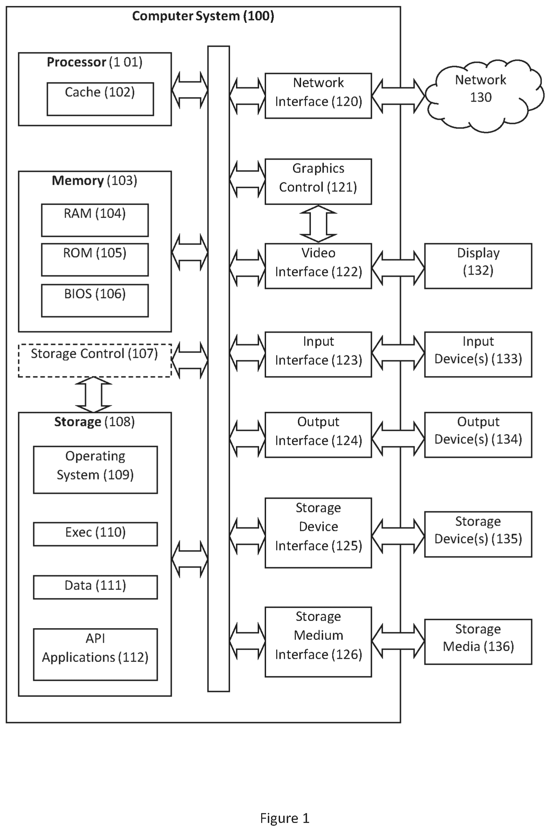

Referring to **FIG. 1****,** a block diagram is shown depicting an exemplary machine that includes a computer system **100** (e.g., a processing or computing system) within which a set of instructions can execute for causing a device to perform or execute any one or more of the aspects and/or methodologies for static code scheduling of the present disclosure. The components in **FIG. 1** are examples only and do not limit the scope of use or functionality of any hardware, software, embedded logic component, or a combination of two or more such components implementing particular embodiments.

Computer system **100** may include one or more processors **101,** a memory **103,** and a storage **108** that communicate with each other, and with other components, via a bus **140.** The bus **140** may also link a display **132,** one or more input devices **133** (which may, for example, include a keypad, a keyboard, a mouse, a stylus, etc.), one or more output devices **134,** one or more storage devices **135,** and various tangible storage media **136.** All of these elements may interface directly or via one or more interfaces or adaptors to the bus **140.** For instance, the various tangible storage media **136** can interface with the bus **140** via storage medium interface **126.** Computer system **100** may have any suitable physical form, including but not limited to one or more integrated circuits (ICs), printed circuit boards (PCBs), mobile handheld devices (such as mobile telephones or PDAs), laptop or notebook computers, distributed computer systems, computing grids, or servers.

Computer system **100** includes one or more processor(s) **101** (e.g., central processing units (CPUs) or general purpose graphics processing units (GPGPUs)) that carry out functions. Processor(s) **101** optionally contains a cache memory unit **102** for temporary local storage of instructions, data, or computer addresses. Processor(s) **101** are configured to assist in execution of computer readable instructions. Computer system **100** may provide functionality for the components depicted in **FIG. 1** as a result of the processor(s) **101** executing non-transitory, processor-executable instructions embodied in one or more tangible computer-readable storage media, such as memory **103,** storage **108,** storage devices **135,** and/or storage medium **136.** The computer-readable media may store software that implements particular embodiments, and processor(s) **101** may execute the software. Memory **103** may read the software from one or more other computer-readable media (such as mass storage device(s) **135, 136)** or from one or more other sources through a suitable interface, such as network interface **120.** The software may cause processor(s) **101** to carry out one or more processes or one or more steps of one or more processes described or illustrated herein. Carrying out such processes or steps may include defining data structures stored in memory **103** and modifying the data structures as directed by the software.

The memory **103** may include various components (e.g., machine readable media) including, but not limited to, a random access memory component (e.g., RAM **104)** (e.g., static RAM (SRAM), dynamic RAM (DRAM), ferroelectric random access memory (FRAM), phase-change random access memory (PRAM), etc.), a read-only memory component (e.g., ROM **105),** and any combinations thereof. ROM **105** may act to communicate data and instructions unidirectionally to processor(s) **101,** and RAM **104** may act to communicate data and instructions bidirectionally with processor(s) **101.** ROM **105** and RAM **104** may include any suitable tangible computer-readable media described below. In one example, a basic input/output system **106** (BIOS), including basic routines that help to transfer information between elements within computer system **100,** such as during start-up, may be stored in the memory **103.**

Fixed storage **108** is connected bidirectionally to processor(s) **101,** optionally through storage control unit **107.** Fixed storage **108** provides additional data storage capacity and may also include any suitable tangible computer-readable media described herein. Storage **108** may be used to store operating system **109,** executable(s) **110,** data **111,** applications **112** (application programs), and the like. Storage **108** can also include an optical disk drive, a solid-state memory device (e.g., flash-based systems), or a combination of any of the above. Information in storage **108** may, in appropriate cases, be incorporated as virtual memory in memory **103.**

In one example, storage device(s) **135** may be removably interfaced with computer system **100** (e.g., via an external port connector (not shown)) via a storage device interface **125.** Particularly, storage device(s) **135** and an associated machine-readable medium may provide non-volatile and/or volatile storage of machine-readable instructions, data structures, program modules, and/or other data for the computer system **100.** In one example, software may reside, completely or partially, within a machine-readable medium on storage device(s) **135.** In another example, software may reside, completely or partially, within processor(s) **101.**

Bus **140** connects a wide variety of subsystems. Herein, reference to a bus may encompass one or more digital signal lines serving a common function, where appropriate. Bus **140** may be any of several types of bus structures including, but not limited to, a memory bus, a memory controller, a peripheral bus, a local bus, and any combinations thereof, using any of a variety of bus architectures. As an example and not by way of limitation, such architectures include an Industry Standard Architecture (ISA) bus, an Enhanced ISA (EISA) bus, a Micro Channel Architecture (MCA) bus, a Video Electronics Standards Association local bus (VLB), a Peripheral Component Interconnect (PCI) bus, a PCI-Express (PCI-X) bus, an Accelerated Graphics Port (AGP) bus, HyperTransport (HTX) bus, serial advanced technology attachment (SATA) bus, and any combinations thereof.

Computer system **100** may also include an input device **133.** In one example, a user of computer system **100** may enter commands and/or other information into computer system **100** via input device(s) **133.** Examples of an input device(s) **133** include, but are not limited to, an alpha-numeric input device (e.g., a keyboard), a pointing device (e.g., a mouse or touchpad), a touchpad, a touch screen, a multi-touch screen, a joystick, a stylus, a gamepad, an audio input device (e.g., a microphone, a voice response system, etc.), an optical scanner, a video or still image capture device (e.g., a camera), and any combinations thereof. In some embodiments, the input device is a Kinect, Leap Motion, or the like. Input device(s) **133** may be interfaced to bus **140** via any of a variety of input interfaces **123** (e.g., input interface **123)** including, but not limited to, serial, parallel, game port, USB, FIREWIRE, THUNDERBOLT, or any combination of the above.

In particular embodiments, when computer system **100** is connected to network **130,** computer system **100** may communicate with other devices, specifically mobile devices and enterprise systems, distributed computing systems, cloud storage systems, cloud computing systems, and the like, connected to network **130.** Communications to and from computer system **100** may be sent through network interface **120.** For example, network interface **120** may receive incoming communications (such as requests or responses from other devices) in the form of one or more packets (such as Internet Protocol (IP) packets) from network **130,** and computer system **100** may store the incoming communications in memory **103** for processing. Computer system **100** may similarly store outgoing communications (such as requests or responses to other devices) in the form of one or more packets in memory **103** and communicated to network **130** from network interface **120.** Processor(s) **101** may access these communication packets stored in memory **103** for processing.

Examples of the network interface **120** include, but are not limited to, a network interface card, a modem, and any combination thereof. Examples of a network **130** or network segment **130** include, but are not limited to, a distributed computing system, a cloud computing system, a wide area network (WAN) (e.g., the Internet, an enterprise network), a local area network (LAN) (e.g., a network associated with an office, a building, a campus or other relatively small geographic space), a telephone network, a direct connection between two computing devices, a peer-to-peer network, and any combinations thereof. A network, such as network **130,** may employ a wired and/or a wireless mode of communication. In general, any network topology may be used.

Information and data can be displayed through a display **132.** Examples of a display **132** include, but are not limited to, a cathode ray tube (CRT), a liquid crystal display (LCD), a thin film transistor liquid crystal display (TFT-LCD), an organic liquid crystal display (OLED) such as a passive-matrix OLED (PMOLED) or active-matrix OLED (AMOLED) display, a plasma display, and any combinations thereof. The display **132** can interface to the processor(s) **101,** memory **103,** and fixed storage **108,** as well as other devices, such as input device(s) **133,** via the bus **140.** The display **132** is linked to the bus **140** via a video interface **122,** and transport of data between the display **132** and the bus **140** can be controlled via the graphics control **121.** In some embodiments, the display is a video projector. In some embodiments, the display is a head-mounted display (HMD) such as a VR headset. In further embodiments, suitable VR headsets include, by way of non-limiting examples, HTC Vive, Oculus Rift, Samsung Gear VR, Microsoft HoloLens, Razer OSVR, FOVE VR, Zeiss VR One, Avegant Glyph, Freefly VR headset, and the like. In still further embodiments, the display is a combination of devices such as those disclosed herein.

In addition to a display **132,** computer system **100** may include one or more other peripheral output devices **134** including, but not limited to, an audio speaker, a printer, a storage device, and any combinations thereof. Such peripheral output devices may be connected to the bus **140** via an output interface **124.** Examples of an output interface **124** include, but are not limited to, a serial port, a parallel connection, a USB port, a FIREWIRE port, a THUNDERBOLT port, and any combinations thereof.

In addition or as an alternative, computer system **100** may provide functionality as a result of logic hardwired or otherwise embodied in a circuit, which may operate in place of or together with software to execute one or more processes or one or more steps of one or more processes described or illustrated herein. Reference to software in this disclosure may encompass logic, and reference to logic may encompass software. Moreover, reference to a computer-readable medium may encompass a circuit (such as an IC) storing software for execution, a circuit embodying logic for execution, or both, where appropriate. The present disclosure encompasses any suitable combination of hardware, software, or both.

Those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by one or more processor(s), or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In accordance with the description herein, suitable computing devices include, by way of non-limiting examples, cloud computing platforms, distributed computing platforms, server clusters, server computers, desktop computers, laptop computers, notebook computers, sub-notebook computers, netbook computers, and netpad computers.

In some embodiments, the computing device includes an operating system configured to perform executable instructions. The operating system is, for example, software, including programs and data, which manages the device's hardware and provides services for execution of applications. Those of skill in the art will recognize that suitable server operating systems include, by way of non-limiting examples, FreeBSD, OpenBSD, NetBSD^{®}, Linux, Apple^{®} Mac OS X Server^{®}, Oracle^{®} Solaris^{®}, Windows Server^{®}, and Novell^{®} NetWare^{®}. Those of skill in the art will recognize that suitable personal computer operating systems include, by way of non-limiting examples, Microsoft^{®} Windows^{®}, Apple^{®} Mac OS X^{®}, UNIX^{®}, and UNIX-like operating systems such as GNU/Linux^{®}. In some embodiments, the operating system is provided by cloud computing. Those of skill in the art will also recognize that suitable mobile smartphone operating systems include, by way of non-limiting examples, Nokia^{®} Symbian^{®} OS, Apple^{®} iOS^{®}, Research In Motion^{®} BlackBerry OS^{®}, Google^{®} Android^{®}, Microsoft^{®} Windows Phone^{®} OS, Microsoft^{®} Windows Mobile^{®} OS, Linux^{®}, and Palm^{®} WebOS^{®}.

### Non-transitory Computer Readable Storage Medium

In some embodiments, the platforms, systems, media, and methods disclosed herein include one or more non-transitory computer readable storage media encoded with a program including instructions executable by the operating system of an optionally networked computing device. In further embodiments, a computer readable storage medium is a tangible component of a computing device. In still further embodiments, a computer readable storage medium is optionally removable from a computing device. In some embodiments, a computer readable storage medium includes, by way of non-limiting examples, CD-ROMs, DVDs, flash memory devices, solid state memory, magnetic disk drives, magnetic tape drives, optical disk drives, distributed computing systems including cloud computing systems and services, and the like. In some cases, the program and instructions are permanently, substantially permanently, semi-permanently, or non-transitorily encoded on the media.

### Computer Programs

In some embodiments, the platforms, systems, media, and methods disclosed herein include at least one computer program, or use of the same. A computer program includes a sequence of instructions, executable by one or more processor(s) of the computing device's CPU, written to perform a specified task. Computer readable instructions may be implemented as program modules, such as functions, objects, Application Programming Interfaces (APIs), computing data structures, and the like, that perform particular tasks or implement particular abstract data types. In light of the disclosure provided herein, those of skill in the art will recognize that a computer program may be written in various versions of various languages.

The functionality of the computer readable instructions may be combined or distributed as desired in various environments. In some embodiments, a computer program comprises one sequence of instructions. In some embodiments, a computer program comprises a plurality of sequences of instructions. In some embodiments, a computer program is provided from one location. In other embodiments, a computer program is provided from a plurality of locations. In various embodiments, a computer program includes one or more software modules. In various embodiments, a computer program includes, in part or in whole, one or more web applications, one or more mobile applications, one or more standalone applications, one or more web browser plug-ins, extensions, add-ins, or add-ons, or combinations thereof.

### Software Modules

In some embodiments, the platforms, systems, media, and methods disclosed herein include software, server, and/or database modules, or use of the same. In view of the disclosure provided herein, software modules are created by techniques known to those of skill in the art using machines, software, and languages known to the art. The software modules disclosed herein are implemented in a multitude of ways. In various embodiments, a software module comprises a file, a section of code, a programming object, a programming structure, a distributed computing resource, a cloud computing resource, or combinations thereof. In further various embodiments, a software module comprises a plurality of files, a plurality of sections of code, a plurality of programming objects, a plurality of programming structures, a plurality of distributed computing resources, a plurality of cloud computing resources, or combinations thereof. In various embodiments, the one or more software modules comprise, by way of non-limiting examples, a web application, a mobile application, a standalone application, and a distributed or cloud computing application. In some embodiments, software modules are in one computer program or application. In other embodiments, software modules are in more than one computer program or application. In some embodiments, software modules are hosted on one machine. In other embodiments, software modules are hosted on more than one machine. In further embodiments, software modules are hosted on a distributed computing platform such as a cloud computing platform. In some embodiments, software modules are hosted on one or more machines in one location. In other embodiments, software modules are hosted on one or more machines in more than one location.

### Databases

In some embodiments, the platforms, systems, media, and methods disclosed herein include one or more databases, or use of the same. In view of the disclosure provided herein, those of skill in the art will recognize that many databases are suitable for storage and retrieval of service ticket, ticket object, grouping, FAQ document, intent, troubleshooting answer list, and/or troubleshooting flow information. In various embodiments, suitable databases include, by way of non-limiting examples, relational databases, non-relational databases, object oriented databases, object databases, entity-relationship model databases, associative databases, XML databases, document oriented databases, and graph databases. Further non-limiting examples include SQL, PostgreSQL, MySQL, Oracle, DB2, Sybase, and MongoDB. In some embodiments, a database is Internet-based. In further embodiments, a database is web-based. In still further embodiments, a database is cloud computing-based. In a particular embodiment, a database is a distributed database. In other embodiments, a database is based on one or more local computer storage devices.

### LLM Technology Stack

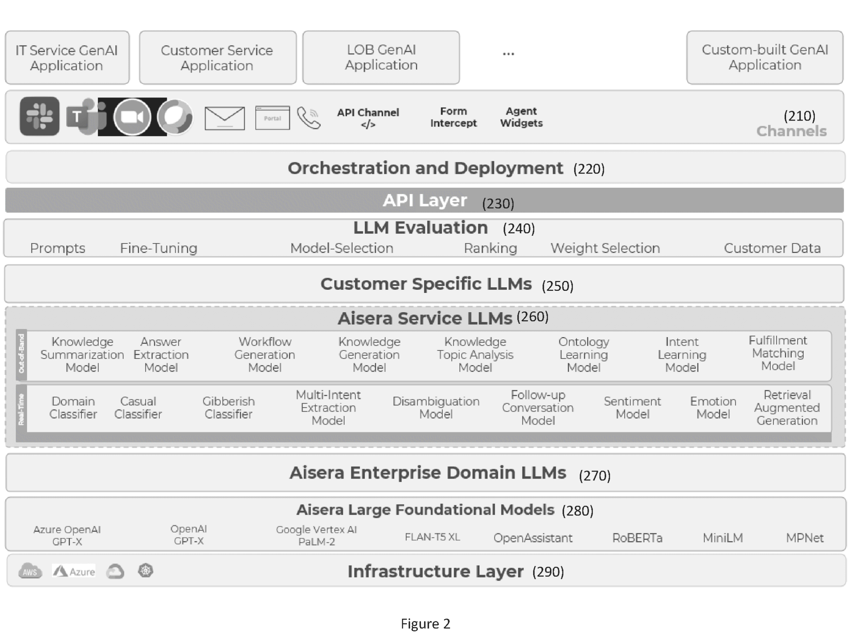

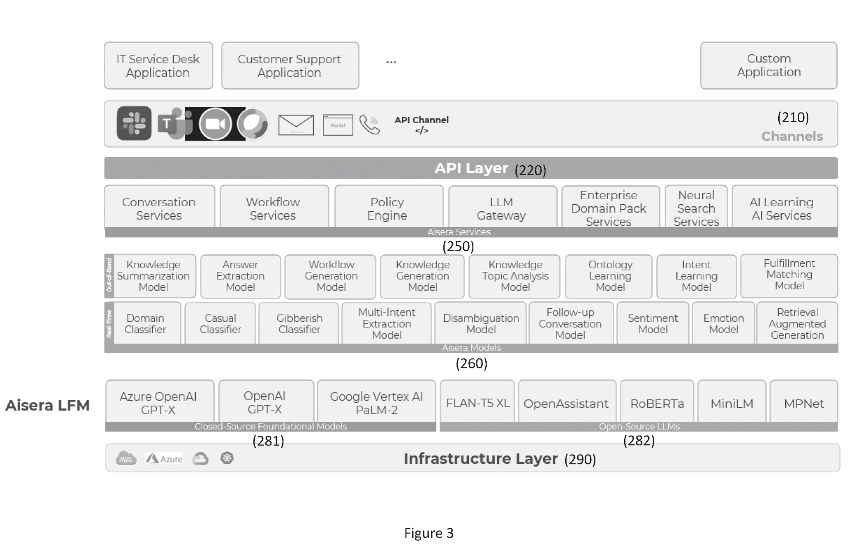

**FIGS. 2** and **3** show diagrams of an exemplary Large Language Model (LLM) Technology Stack. In some embodiments, the LLM stack herein can be deployed, scaled and operated both in public clouds (AWS, GCP, Azure, etc.) on an Infrastructure Layer **290** and locally (on-premise) using the Kubernetes container orchestration platform.

In some embodiments, the LLM stack herein embeds a plurality of large foundational models (LFMs) **280,** including both closed-source LFMs **281** via an API layer **230** integrated with LFMs, and open-source LFMs **282** via the LFM deployment and execution in secure Kubernetes containers. Non-limiting examples of closed-source LFM providers which are integrated with The LLM stack herein via APIs are Azure OpenAl (complete and chat APIs for GPT-3, GPT-3.5, and GPT-4), OpenAI (complete and chat APIs for GPT-3, GPT-3.5 and GPT-4), Google Vertex AI (PaLM-2). Non-limiting examples of open-source LFM are FLAN-T5, OpenAssistant, RoBERTa, MiniLM, and MPNet.

In some embodiments, the LLM stack herein enables a developer to choose from a pool of supported LFM/LLM models using a catalog, or to integrate a new LFM/LLM model using the LLM Gateway. In some embodiments, the LLM Gateway Toolkit allows the developer to select the LFM provider of choice, either from a catalog or by selecting "New LFM" (in which case he needs to provide the LFM Provider URL and the API Credentials to establish a successful connection), create a new LLM Group, which is a logical folder associated to the developer, and simply upload the new LLM models in the LLM group.

The LLM stack herein provides the developer with the flexibility of choosing both the LFM framework and a customer-specific LLM model **250** for any given task based on the different LLM services needed to operate a conversational AI assistant. As a result, in some embodiments, developers can develop end to end LLM workflows or LLM services **260** which comprise more than one task by choosing a specific LFM/LLM model for each specific task to be executed in the pipeline.

In some embodiments, developers can calibrate each model per their objectives to deliver a high level of precision and accuracy. In some embodiments, LLM stack herein allows the developer to calibrate the mode using the below behaviors:

**Zero-shot Learning:** The developer can use the pre-trained LLM model as-is. Examples of such tasks are language detection, language translation, sentiment detection, emotion detection, etc.

**Few-shots Learning** (e.g., prompt engineering or inference-time tuning): In some embodiments, the developer guides the model to the desired output by providing the LLM model with few examples and instructions. In some embodiments, this calibration model does not alter the underlying parameters of the LLM models.

**Instruction-based Fine-Tuning:** This method may provide a higher level of precision and accuracy than zero-shot or few-shot learnings. In some embodiments, in this method, the developer trains the model using specialized datasets, which are high-quality human-generated prompt/response pairs specifically designed for instruction tuning LLMs. In some embodiments, this method of calibration acts deeper in the LLM model by updating the internal parameters used by the model. The model fine-tuning is the most advanced calibration method and may require both computing resources for training and supervised, high-quality and extensive datasets to generate the prompt/response sentence pairs for training.

In some embodiments, the Large Language Model (LLM) technology stack herein can operate in multiple industry verticals (e.g., logistics, healthcare, wealth management, retailers, banking, airlines, and insurance) and enterprise domains **270** (e.g., IT, HR, legal and compliance, finance, supply chain management, facilities). The Enterprise Domain LLMs are LLM models which have been extensively fine-tuned using prompt/response sentence pairs extracted from Enterprise Domain Packs (EDPs). In some embodiments, each Enterprise Domain Pack comprises a domain-specific ontology, which is an extensive set of entity classes, entity names, entity synonymous like entity expansions, and abbreviations (initialisms, acronymous, shortenings and contractions) and domain-specific taxonomy, which is an extensive set of intents (and intent phrases) associated to each entity of the ontology. Each domain EDP may comprise hundreds of thousands to millions of intent phrases.

In some embodiments, the Large Language Model (LLM) technology stacks herein use pre-packaged and fine-tuned a large pool of domain-specific LLM Services **260** using one or more EDPs. The LLM Services **260** may be available to developers in a Service LLM catalog. In some embodiments, the developer uses the LLM Services **260** via an API, or can select or drag/drop/chain them into a conversational workflow using a studio to build complete experiences around a service.

In some embodiments, the LLM stack herein provides a further level of LLM model customization beyond the calibration offered via the instruction-fine tuning and EDP. The Large Language Model (LLM) technology stack herein offers special learning pipelines, which act on the specific customer datasets (e.g., tickets, knowledge articles, call transcripts, etc.) which may automatically extract entities and intents which are very specific to the customer (e.g., within the domain of operation). In some embodiments, this custom-specific knowledge is then used to generate custom-specific prompt/responses which may then be used to execute a second round of instruction-based fine tuning on a proprietary Enterprise Domain LLMs, which may be fine-tuned using only the domain-specific EDPs. Exemplary proprietary AI Learning pipelines directly linked to instruction-based fine-tuning pf LLM models are listed below:

**Tickets Learning Pipeline:** Iteratively and continuously processes tickets and automatically extracts the main entities and associated intents. By grouping tickets tagged with the same pair of intents and entities, the pipeline may automatically generate intent phrases capturing the language diversity used by the specific customer to express the same concept.

**Conversation Learning Pipeline:** Iteratively and continuously processes user requests and calls transcripts, and automatically extracts the main entities and associated intents. By grouping conversations tagged with the same pair of intent and entity, the pipeline may automatically generate intent phrases capturing the language diversity used by the specific customer to express the same concept.

**Knowledge Learning Pipeline:** Processes ingested customer knowledge articles and may automatically extract the main entities, associated intents and large set of intent phrases from each article.

**Ontology Generation:** Consumes all the entity-based learning from the different pipelines, may automatically discover expansions, abbreviations, and relationships among the entities, and organizes all the entities into an ontology graph which may be made available as a catalog.

**Taxonomy Generation:** Consumes all the intent-based learning from the different pipelines and may automatically organize all semantic similar intents into a multi-category multi-level intent taxonomy which is made available as a catalog.

In some embodiments, the LLM stack herein provides an LLM evaluation level **240,** which the user with a set of toolkits and APIs that developers can use to evaluate the performance of the LLM models herein. Developers can access toolkits and APIs for development, testing and benchmarking the following: prompt engineering (e.g., few shots learning), fine tuning, Model Selection via LLM catalog and LLM Gateway, model performance ranking which automatically scores the models against the same dataset to automatically stack rank LFM/LLM models based on the accuracy achieved, and manage customer datasets for instruction-fine tuning models.

In some embodiments, the LLM stack herein offers a comprehensive Orchestration and Deployment Layer **220** that is used to allocate and deploy resources (including servers, virtual machines, networking, security and storage), monitor software lifecycle operations, and recover from error conditions. In some embodiments, the LLM stack herein offers a large diversity of channels **210** to interface with users like Slack, Microsoft Teams, Cisco WebEx, Zoom, SMS/MMS, Email and Voice), Administrator Portal, Form Intercept and Agent Widgets.

In some embodiments, prompts can have a separate LLM Provider, internal or external (e.g., OpenAI, Bard, etc.). Input Variables can be passed into prompts (e.g. Chat history). In some embodiments, prompt groups and/or prompt chaining is implemented as well.

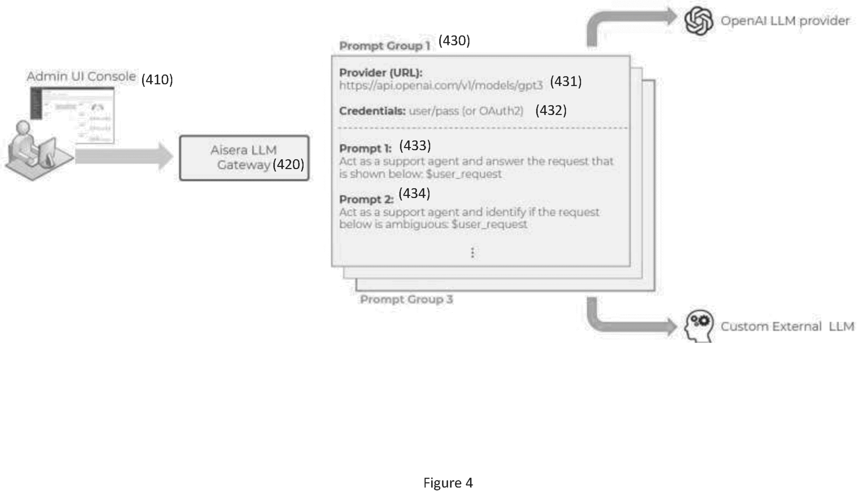

In some embodiments, per **FIG. 4****,** an LLM provider is registered through a LLM Gateway by an Admin UI console **410.** In some embodiments, prompts are added that will be used mainly for preconfigured Tasks through the LLM Gateway **420** (e.g., an Admin UI console). In some embodiments, calling the registered prompts can be performed by using a prompt for the main NLU path by inserting them inside the Pre-Handling Flow, or as an auxiliary capacity, by adding prompts inside a flow (e.g., using the new LLM action). In the example shown, a first prompt group **430** comprises a provider URL **431** and the associated credentials **432,** a first prompt **433,** and a second prompt **434.** As shown, the first prompt **433** and the second prompt **434** of the first prompt group **430** are sent to an OpenAI LLM provider **450.** Further, a second prompt group **440** is sent based on its provider URL (not shown), to a custom external LLM **460.** In some embodiments, the LLM Gateway **420** determines, based on the prompt, the provider URL **431,** the associated credentials **432,** or any combination thereof whether to send the prompt to the OpenAI LLM provider **450** or to the custom external LLM **460.** In some embodiments, the LLM Gateway **420** sends the prompt to the OpenAl LLM provider **450** for general prompts that can be answered by the OpenAl LLM provider **450.** In some embodiments, the LLM Gateway **420** sends prompts specific to an organization, an application, or other specialized department to the custom external LLM **460.**

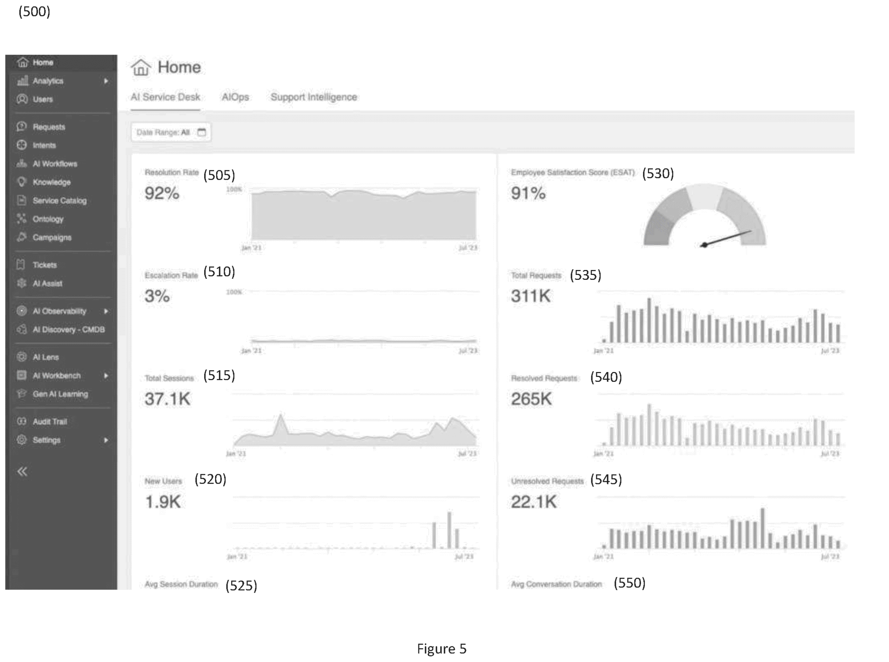

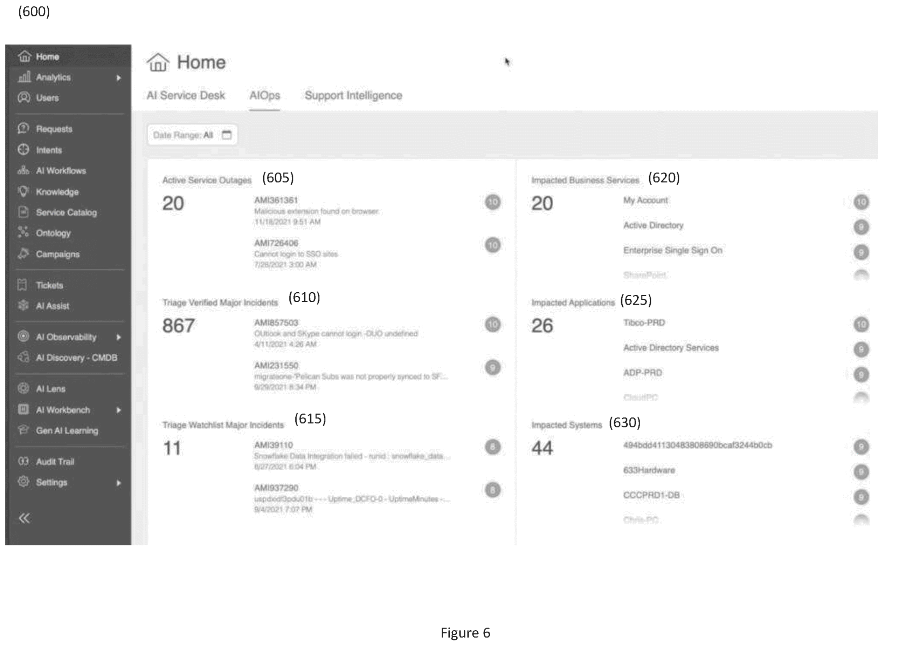

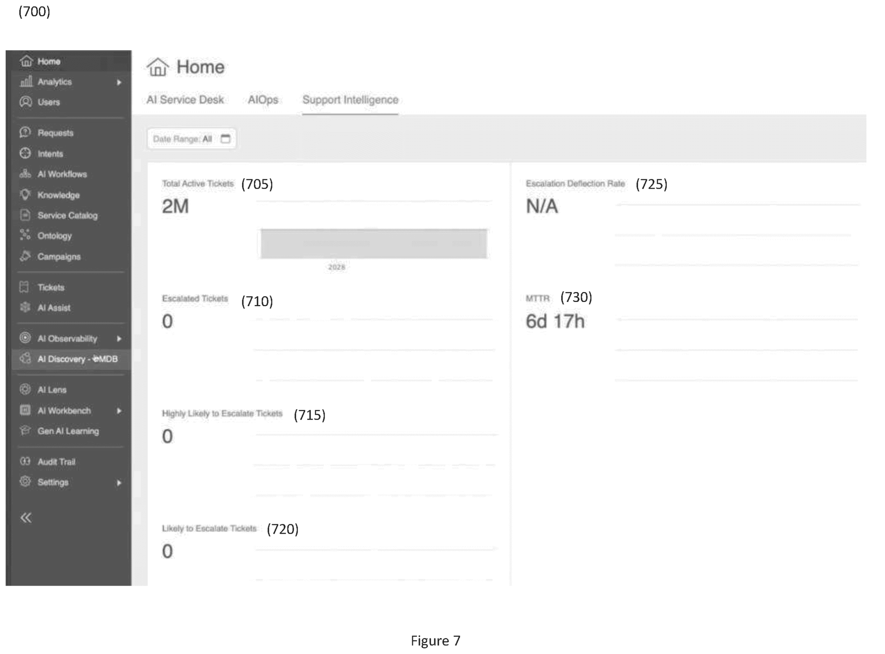

In some embodiments, technology stack described herein includes an administrative (or admin) console. In further embodiments, the admin console includes a front-end interface, such as a GUI. In still further embodiments, the GUI includes features allowing an admin user to review and configure features of the technology described herein. By way of example, in some embodiments, per **FIG. 5****,** a GUI for an admin console **500** includes navigation elements allowing a user to access, by way of examples, analytics, users, requests, intents, Al workflows, knowledge bases, service catalogs, ontologies, campaigns, tickets, AI assist, AI observatory, AI discovery, AI lens, Al workbench, gen AI learning, an audit trail, and settings. Further, in some embodiments, per **FIG. 5****,** a GUI for an admin console **500** includes an AI service deck feature providing access to data pertaining to, for example, resolution rates **505,** escalation rates **510,** total sessions **515,** new users **520,** average session duration **525,** employee satisfaction score **530,** total requests **535,** resolved requests **540**, unresolved requests **545,** and average conversation duration **550.** By way of further example, in some embodiments, per **FIG. 6****,** a GUI for an admin console **600** includes an AI ops feature providing access to data pertaining to, for example, active service outages **605**, triage verified major incidents **610,** triage watchlist major incidents **615,** impacted business services **620,** impacted applications **625,** and impacted systems **630**. By way of still further example, in some embodiments, per **FIG. 7****,** a GUI for an admin console **700** includes an support intelligence feature providing access to data pertaining to, for example, total active tickets **705,** escalated tickets **710,** highly likely to escalate tickets **715,** likely to escalate tickets **720**, escalation deflection rate **725,** and mean time to recovery, repair, respond, or resolve (MTTR) **730.**

### Overview

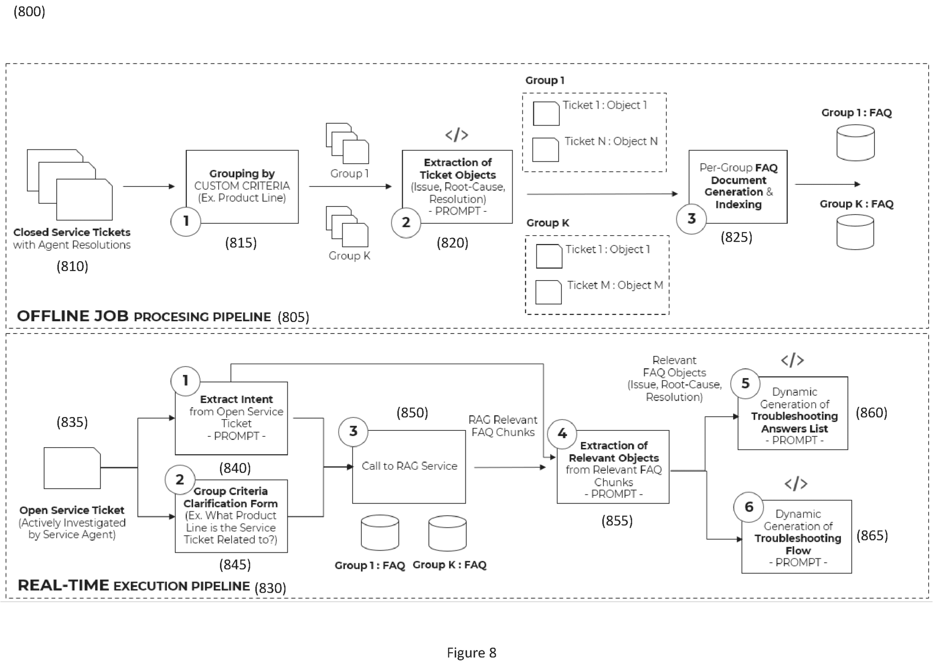

In **FIG. 8** the logical architecture of the system is illustrated. The system consists of two different pipelines: offline **805** and real-time **830.** The offline pipeline **805** takes as an input a set of closed service tickets **810,** then it will group them using some criteria **815,** such as tickets associated with the same product line, and process each group separately. Notice that the grouping module **815** can be bypassed via configuration settings; in such case, all service tickets will be considered together and grouped all together in the same group. The group of tickets is then processed by a Large Language Model (LLM) module called "Extraction of Ticket Objects" **820**, which takes each service ticket and extracts the issue reported in the ticket, the resolution provided by the agent, and the root-cause identified by the agent when interacting with the user. The FAQ Document Generation & Indexing **825,** takes the ticket objects as an input, removes duplicates, generates a document in a format specified via configuration (can be HTML, or PDF, or else), and then index the document (RAG indexing Job) such it can be used by the RAG service during the real-time processing pipeline. The RAG service operates at "chunk levels," meaning that the document produced will be first split into smaller chunks before being indexed and stored into a datastore.

Note that in this context, ticket objects are defined as duplicates if and only if the ticket objects relate to the exact same issue, same root cause and same resolution even though those concepts might be expressed using different levels of detail or wording.

An example of an FAQ document automatically generated by running the offline processing pipeline on service tickets associated with product line "Core Reporting" (before the chunking operation) is shown in **Example 3.**

The real-time pipeline **830** is triggered by the service agent, who is actively looking at a newly opened service ticket **835** by a user. The service agent will be asked to verify whether key information about the open case is correct (in our example is the product line name), and soon thereafter, the open case is processed (title, description and comments field). First, the main issue reported by the user in the ticket is extracted using the Extract Intent LLM **840.** The extracted issue and associated product name is then passed to the RAG Information Retrieval System **850** which using the indexed FAQ document, will retrieve all relevant chucks. A chunk is relevant in this case if it refers to the same product line and contains at least one ticket object which describes a similar issue as the one extracted from the open case. Notice that each chunk might contain hundreds of ticket objects (meaning a chunk is not a ticket object but a group of ticket objects). The relevant chunks are then passed to the Relevant Ticket Object Extraction LLM **855,** which takes all the relevant chunks and the issue from the open case, and extracts precisely all relevant ticket objects. The set of relevant ticket objects ae then processed by either the Dynamic Generation of Troubleshooting Answer List LLM **860** (which provides the carousel experience) or the Dynamic Generation of Conversational Troubleshooting Flow LLM **865** (which provides the conversational flow experience). The output(s) are then rendered to the service agent.

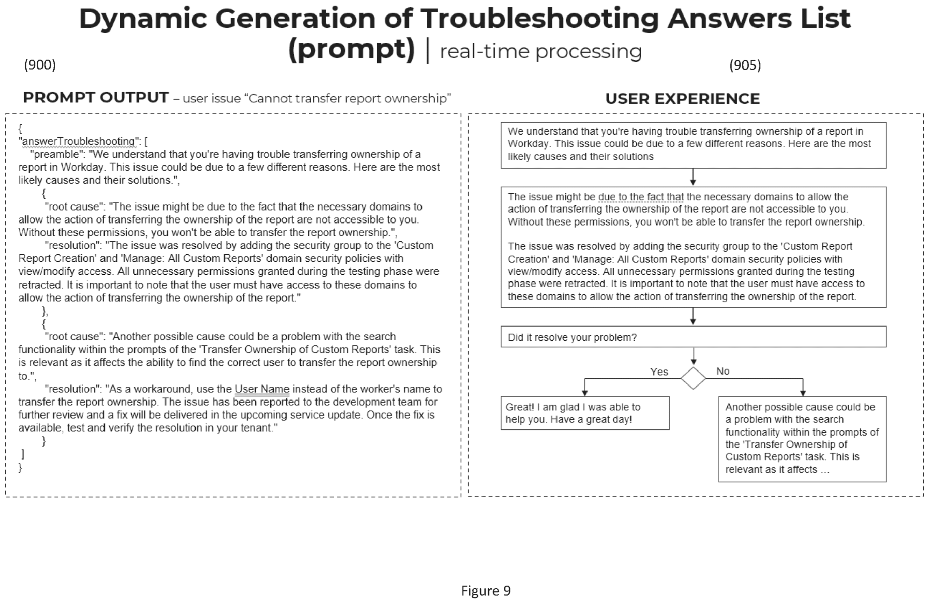

An example of the Dynamic Generation of Troubleshooting Answer List produced using the ticket objects relevant to the user issue of "unable to transfer ownership of a report" is shown in **FIG. 9****.** As shown in **FIG. 9****,** a prompt output **900** is used in a real-time processing pipeline to generate a user experience **905** wherein the Troubleshooting Flow is organized as a sequence of "answer cards" addressing the user issue "unable to transfer ownership for a report." Each answer card provided a possible root-cause of the problem and associated resolution. In some embodiments, the answer cards are rendered to the user starting with the most popular root cause and corresponding resolution and continue till either the problem has been resolved or it reaches the end of the relevant ticket objects provided in the prompt. In some embodiments, the answer cards comprising the troubleshooting flow are ranked by popularity, meaning the first answer card shown to the user relates to the most popular root cause and associated resolution for the reported user issue. The flow starts with a preamble which acknowledges the issue reported by the user in the open service ticket, and iteratively, one-by-one, it shows each relevant answer card. Between answer cards, the user will be prompted to acknowledge whether the provided answer card has successfully addressed the user problem or not. If the answer card helped the user to solve the problem, then the flow terminates gracefully with an acknowledgment of the successful resolution and a user greeting. Otherwise, the flow presents the second, third, etc. most popular resolutions till either one of the provided answer card solves the user problem or the flow reaches the last answer card in his list.

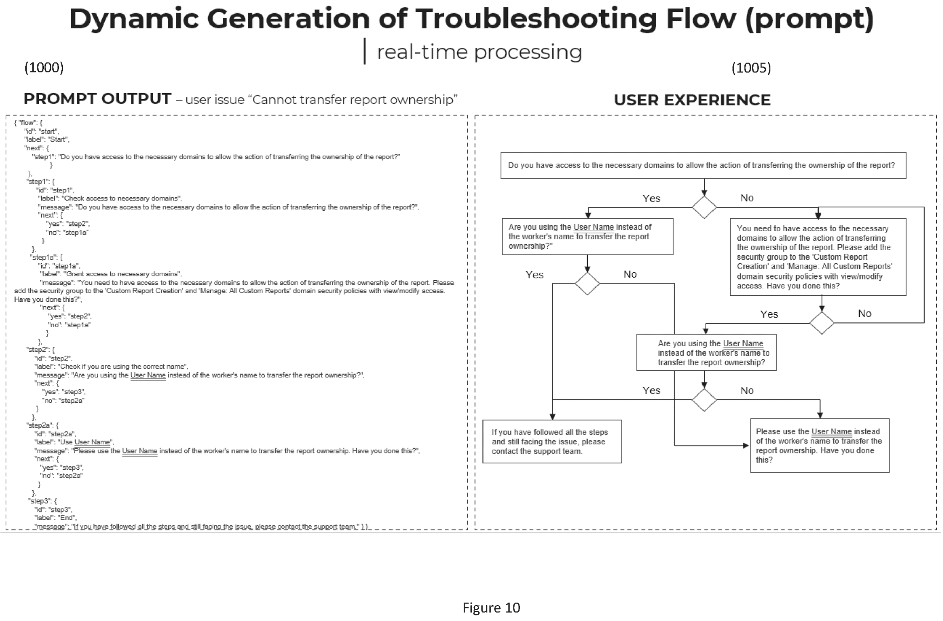

An example of the Dynamic Generation of Troubleshooting Flow with ticket objects associated with the issue of "unable to transfer ownership of a report" is provided in **FIG. 10****.** As shown in **FIG. 10****,** a prompt output **1000** is used in a real-time processing pipeline to generate a user experience **1005** flow. In this embodiment, the prompt takes all the relevant ticket objects and generates in one-shot an immersive conversational flow which aims at providing the resolution to the user issue reported in the open case by engaging into a series of question and answers to first pinpoint the correct root cause of the problem, and only then provide the corresponding resolution.

### EXAMPLES

The following illustrative examples are representative of embodiments of the software applications, systems, and methods described herein and are not meant to be limiting in any way.

### Example 1 - Extraction of Ticket Objects Prompt

The following is an exemplary prompt used in an offline processing pipeline to extract a ticket object from a service desk ticket:

### ############### START PROMPT ###########

Act as a technical customer service agent for Workday CRM (https://www.workday.com/en-us/homepage.html).

I am giving a conversational transcript ($convTranscript) between a user and an expert workday service agent. You need to process $convTranscript and save your answer in a JSON-formatted answer ($answerJSON) as reported below:

```
 {
  "answer": [
 {
 "issue": str, "resolution": str, "root cause": str
  },
  ...
  ]
  }
 
```

Process the $convTranscript following step-by-step the instructions below:

**Instruction 1.** Read carefully and entirely $convTranscript (title, description and comments) and deeply understand the issues / requests reported by the user and the associated resolutions provided by the workday agent.

**Instruction 2.** Extract all the specific and distinct issue / request reported by the user capturing the most important details and save the extracted issue / request in "issue" using no more than 15 words. Extract the corresponding resolutions provided by the service agent and ensure to include all the provided troubleshooting steps. You must include any reference to knowledge articles and associated URLs provided by the agents and save it in "resolution". Ignore any user request / issue which is associated with a vague, not actionable resolution, or which require custom-specific assistance/work from the workday agents (like agent did something in a sandbox environment). Extract the possible root cause identified by the agent for which the agent has recommended the resolution steps. Save the root cause into "root cause".

**Instruction 3.** Because the combination of user issue / request and corresponding agent resolutions will be used to generate a formal Workday FAQ Troubleshooting Guide, it is important that you use a formal language / tone in describing both the user issue / request and the agent resolutions. The user issue / request shall be written as a short title of a FAQ document and shall not contain any specific reference to user situations but more general to be applicable to other users. Similarly, the agent resolutions shall be written as clear and formal troubleshooting steps of a FAQ document and shall not contain any specific reference to user situations but rather generalize them to capture its meaning otherwise the resolution will not be applicable to other users.

For example, an issue like "User wants to customize Workday Usage Metrics to exclude HR group, should be written and reported as "Customize Workday Usage Metrics to exclude a Group" (note HR is omitted because a specific group name).

For example, an issue like "Re-running Workday Usage Metrics reports for the previous month of July", shall be written and reported as "Re-run Workday Usage Metrics reports for the previous months".

For example, a resolution like "The calculated field on the nested evaluated expression is returning true, and when true, the value associated with the Last Effective Date in LOCATION is equal to 02/28/2023. Then when you run the report 'Work State', the calculated field is evaluating Source Field Worker Primary Home State with a Lookup value as of date effective date based on this true value.", should be written and reported as "The issue might be due to the calculated field on the nested evaluated expression returning true. When true, the value associated with the Last Effective Date in a specific location is evaluated. When running the report, the calculated field evaluates the Source Field Worker Primary Home State with a Lookup value as of date effective date based on this true value.".

For example, a resolution like "Workday Usage Metrics can only generate data on the first Sunday of each month. You can view usage metrics data for a particular month, but no data is available before 2012 or the date you opted in. Refer to these articles for more details: 'How Does Workday Usage Metrics Reporting Work' and 'Concept: Workday Usage Metrics'", should be written and reported as "Workday Usage Metrics can only generate data on the first Sunday of each month. You can view usage metrics data for a particular month, but no data might be available before the date of your report or the date you opted in. Refer to these articles for more details: 'How Does Workday Usage Metrics Reporting Work' and 'Concept: Workday Usage Metrics'.".

The conversation transcript $convTranscript is below:

### ############### END PROMPT ###########

### Example 2 - Extraction of Ticket Objects Prompt Applied

The following is an example of output produced by the extraction of ticket object prompts, as exemplified in **Example 1:**

### Input: Service Desk Ticket.

Hello! We are trying to transfer ownership of a scheduled process of a report to an ISU, however we don't see the option to do that - the ISU simply does not appear as an option. Is there a reason for this? We were not able to find a definitive answer on community so we are hoping for some assistance.

### Comments (6)

11/26/2023 12:11 PMPlease note this case is now closed. This is an automated message. If assistance is still required, please add a comment within 30 days of closure and the case will reopen.

11/21/2023 12:11 PMPlease review the last comment entered on this case. For additional assistance, please add a comment to this case. If no further help is required, please feel free to close this case. This is an automated message. If no response is received, this case will be closed within 5 days. At any point you may add a comment requesting additional assistance or requesting a follow up phone call. If a case has been closed less than 30 days, you may add a comment to reopen.

11/16/2023 12:11 PMPlease review the last comment entered on this case. To provide additional information or if a confirmation was requested, please add a comment to this case. If no further assistance is required, please feel free to close this case. This is an automated message. If no response is received or the case is not closed, you will receive one more request for an update and if no action is taken, this case will be closed within 10 days. At any point you may add a comment requesting additional assistance or requesting a follow up phone call.

11/9/2023 12:05 PMHi PERSON, In order to be able to have the ownership of the scheduled process for the report, the report has to be either shared or owned by the user. It could have been that the user of the other reports was the owner of the report? Or might have been a member of the group with which the report has been shared. I am glad that sharing the report with the user resolved the issue. Also, please note: When you transfer ownership of a scheduled future process, the report resets to Do not share report output for both report output and shared with security groups/users. Please refer to the following documentation: https://DOMAIN_NAME/admin-guide/en-us/manage-workday/tenant-configuration/it-administrator-resources/background-processes/pjt1576265040597.html Thank you, PERSON

11/9/2023 11:01 AMHello PERSON! I left out an important detail in my original comment - This issue is only occurring on certain reports, not all reports. There are some reports that we have been able to transfer ownership to without issue. Nonetheless, I double checked that the ISSG created for the user had access to all the relevant domains associated with reports, as well as the domains securing the report data source and report fields. I did discover that once I shared the report with the ISU, it let me transfer ownership without issue. Why is it that this specific report required me to share the definition with the user before I could transfer ownership whereas other reports did not require this?

11/9/2023 10:16 AM Hello PERSON, I am the analyst assisting with this case. Please take a look at the following knowledge article on the process of transferring the ownership: https://DOMAIN_NAME/workdaycustomercenter/CC_ArticleDetails?id=NRP This one as well: https://DOMAIN_NAME/workdaycustomercenter/CC_ArticleDetails?id=kA04X00000012qVSAQ The ISU user has to be added to an Integration Security group. Ensure that the ISSG (Integration System Security Group) you transfer the scheduled alert to has access to the following domains Custom Report Administration Manage: All Custom Reports Notification Alerts Please let me know if you have any additional questions. Thank you, PERSON

```
 Output: Ticket Object.
  $answerJSON=
  {
  "answer": [
  {
 
```

**"issue":** "Unable to transfer ownership of a scheduled report process to an ISU",
**"resolution":** "The report has to be either shared or owned by the user to transfer the ownership of the scheduled process. Ensure that the Integration System Security Group (ISSG) you transfer the scheduled alert to has access to the following domains: Custom Report Administration Manage, All Custom Reports, and Notification Alerts. When you transfer ownership of a scheduled future process, the report resets to 'Do not share report output' for both report output and shared with security groups/users. Refer to the following documentation: https://DOMAIN_NAME/admin-guide/en-us/manage-workday/tenant-configuration/it-administrator-resources/background-processes/pjt1576265040597.html, https://DOMAIN_NAME/workdaycustomercenter/CC_ArticleDetails?id=NRP, https://DOMAIN_NAME/workdaycustomercenter/CC_ArticleDetails?id=kA04X00000012qVSAQ",
**"root cause":** "The report was not shared or owned by the user and the ISSG did not have access to the necessary domains"

```
  }
]
  }
```

### Example 3 - FAQ Document

The following is an example of a FAQ document automatically generated by running the offline processing pipeline on service tickets (per group) associated with a product line, for example "Core Reporting" (before a chunking operation):
Group Criteria Label: "Product Line"
Group Criteria Value: "Core Reporting"
FAQ : Product Line "Core Reporting"
**Issue:** Error when defaulting date prompt at run time for journeys report.

**Resolution:** The issue is due to the Built-in prompts that use 'Moment' type date/time fields to return same cases regardless of users time zone and 'Local Date' type date fields (e.g. field) are not compatible built-in prompts. TO resolve this, use current moment fields for the prompt defaults.

**Root Cause:** Incompatibility between 'Moment' type date/time fields and 'Local Date' type date fields in prompts.

**Issue:** Extract Worker Job Details Report not showing terminated employees

**Resolution:** Check for any recent changes made to the report Filter configuration. Confirm if these changes were tested before being implemented in Production. If the issue persists, replicate the issue in for further troubleshooting. If changes were made by a specific user, consult with them or their team to understand the changes.

**Root Cause:** Changes made to the report Filter configuration might not have been tested before implemented in Production.

**Issue:** Error running report using Data Source Extension

**Resolution:** The issue was escalated to the development team for further review. The agent suggested to try and publish a version 2 in the problematic instances to document the issue. The agent also requested additional information to understand business impact and to prioritize the issue properly.

**Root Cause:** The exact root cause was not identified in the conversation. However, the agent

suspected that it might be related to calculated fields in error in the custom data source.

**Issue:** Deep link to Personal Information Change not working

**Resolution:** The issue might be due to the links being generated using the browser, Which might have added some unsupported attributes. The recommended way to generate links to business processes is using the 'Create Link to Initiate Business Process' task and selecting the appropriate task for which the link needs to be generated. This method does not append any additional attributes which might be browser dependent.

**Root Cause:** The deep link might have been generated using the browser, which added unsupported attributes causing the link to stop working.

### Example 4 - Dynamic Generation of Troubleshooting Answer List Prompt

The following is an exemplary prompt used in an online processing pipeline to dynamically generate a troubleshooting answer list:

### ############### START PROMPT ###########

Act as a technical customer service agent for Workday CRM (https://www.workday.com/en-us/homepage.html).

I am giving (1) a set of records ($inputRecords), each record comprising a user issue, an identified root cause by the service agent and the proposed resolution by the service agent, and (2) a service ticket ($inputTicket). Process the $inputRecords and $inputTicket following step-by-step the instructions below and save your answer in the JSON-formatted answer ($answerTroubleshooting) below:

```
  {
 ] "answerTroubleshooting": [
 "preamble": str,
 {
"root cause": str, "resolution": str
 },
 ...
  ]
}
```

**Instruction 1.** Read carefully the $inputTicket, and extract the main user issue (intent) by ensuring to include the main entity of reference in the intent.

**Instruction 2.** Use the extract user intent from $inputTicket to identify which of the records provided in $inputRecords the users have reported an issue (intent) like the intent extracted from $inputTicket. Remember that two intents are similar if are about the exact same problem related to the exact same main entity of reference even though they might use different wordings or level of details. For example, "experience frequent disconnections with vpn" and "vpn connectivity goes up and down" shall be considered similar. The similar records you have found shall be ranked based on the similarity to the user request, with most similar at the top and least like to the bottom. Save the list of similar records in $relevantRecords.

**Instruction 3.** Generate an answer which acknowledges the user issue ($inputTicket), and provides a list of the most likely root causes (no more than 5) and associated resolutions from the composed list $relevantRecords. Save the acknowledgement in "preamble", take the root cause, and re-write in such a way it is clear to the user why the root cause is relevant to the user issue. Then save it in "root cause" and the associated resolution in "resolution".

The input service ticket $inputTicket is {inputTicket}.

The set of input records $inputRecords is {input_records}.

Your troubleshooting answer $answerTroubleshooting is:

### ############### END PROMPT ###########

### Example 5 - Dynamic Generation of Troubleshooting Flow Prompt

The following is an exemplary prompt used in an online processing pipeline to dynamically generate a troubleshooting flow:

### ############### START PROMPT ###########

Act as a technical customer service agent for Workday CRM (https://www.workday.com/en-us/homepage.html).

I am giving (1) a set of records ($inputRecords), each record comprising a user issue, an identified root cause by the service agent and the proposed resolution by the service agent, and (2) a service ticket ($inputTicket). Process the $inputRecords and $inputTicket following step-by-step the instructions below and generate a response, in JSON-format called $responseJSON, describing a sequence of actions (also known as a flow) an end user must follow to resolve the user issue reported in $inputTicket using solely the resolutions provided in $inputRecords.

Before giving the instructions to generate the flow, let me define the structure of a flow:

A flow represents the sequence of actions the user needs to take presented as a linked list of steps.

The number of steps can be arbitrary depending.

In each step:
1. The value of "id" key, is a string identifying an action for the end user.
2. the value of "label" key, is a descriptive summary of the action.
3. The value of "next" key, contains options the user can select from. The value of an option is the id of the action the end user is directed to.
4. The value of "message" key, if exists, should include a reasonable question the chatbot will ask the end user in order to transition to the next step.

Follow the instructions below, step-by-step, to process the $inputTicket request
**Instruction 1.** Read carefully the $inputTicket, and extract the main user issue (intent) by ensuring to include the main entity of reference in the intent.
**Instruction 2.** Use the extract user intent from $inputTicket to identify which of the records provided in $inputRecords the users have reported an issue (intent) like the intent extracted from $inputTicket. Remember that two intents are similar if they are about the exact same problem related to the exact same main entity of reference even though they might use different wordings or level of details. For example, "experience frequent disconnections with vpn" and "vpn connectivity goes up and down" shall be considered similar. The similar records you have found shall be ranked based on the similarity to the user request, with most similar at the top and least like the bottom. Save the list of similar records in $relevantRecords.
**Instruction 3.** Generate a troubleshooting flow which uses the most likely root causes (no more than 5) and associated resolutions from the composed list $relevantRecords.

The input service ticket $inputTicket is {inputTicket}.

The set of input records $inputRecords is {input_records}.

Your troubleshooting answer $answerTroubleshooting is:

############### END PROMPT ###########

While preferred embodiments of the present disclosure have been shown and described herein, it will be obvious to those skilled in the art that such embodiments are provided by way of example only. Numerous variations, changes, and substitutions will now occur to those skilled in the art without departing from the inventive concept as set out in the appended claims. It should be understood that various alternatives to the embodiments of the disclosure described herein may be employed in practicing the disclosure.

## Claims

1. A computer-implemented method for dynamically troubleshooting an unresolved service ticket comprising:
a) providing an offline processing pipeline configured to perform at least:
i. ingesting a plurality of closed service tickets;
ii. grouping the closed service tickets;
iii. extracting a ticket object from each closed service ticket in each group;
iv. generating a document for each group using the group ticket objects; and
v. indexing the document; and
b) providing a real-time execution pipeline configured to perform at least:
i. receiving an open service ticket;
ii. extracting at least one issue from the open service ticket;
iii. identifying a relevant indexed document;
iv. extracting all relevant ticket objects from the relevant indexed document using the issue from the open service ticket;
v. dynamically generating a troubleshooting answer list and conversational flow utilizing the relevant ticket objects; and
vi. presenting the troubleshooting flow.

2. The method of claim 1, wherein the offline processing pipeline performs operations offline, out-of-band, and/or not in real-time.

3. The method of claim 1 or 2, wherein the real-time execution pipeline performs operations online, in-band, and/or in real-time.

4. The method of any of the preceding claims, wherein the closed service tickets are grouped by similarity.

5. The method of claim 4, wherein the closed service tickets are grouped by association with a particular product line.

6. The method of any of the preceding claims, wherein the extracting a ticket object is performed by a large language model (LLM).

7. The method of any of the preceding claims, wherein each ticket object comprises one or more issues, one or more resolutions, and one or more root causes.

8. The method of any of the preceding claims, wherein generating a document for each group comprises removing duplicate ticket objects.

9. The method of any of the preceding claims, wherein the generating a document for each group is performed by a large language model (LLM).

10. The method of any of the preceding claims, wherein the extracting at least one issue from the open service ticket is performed by a large language model (LLM).

11. The method of any of the preceding claims, wherein the real-time execution pipeline is further configured to perform retrieving all relevant chunks from the relevant indexed document utilizing a RAG information retrieval system.

12. The method of any of the preceding claims, wherein the generating a troubleshooting answer list is performed by a large language model (LLM).

13. The method of any of the preceding claims, wherein the generating a conversational flow is performed by a large language model (LLM).

14. The method of any of the preceding claims, wherein the troubleshooting flow is presented in a format comprising a carousel of answer cards, wherein the carousel first provides a most likely root cause and a corresponding resolution of the issue.

15. A computer-implemented system for dynamically troubleshooting an unresolved service ticket comprising at least one processor and instructions causing the at least one processor to perform operations comprising:
in an offline processing pipeline, performing at least:
a) ingesting a plurality of closed service tickets;
b) grouping the closed service tickets;
c) extracting a ticket object from each closed service ticket in each group;
d) generating a document for each group using the group ticket objects; and
e) indexing the document; and
in a real-time execution pipeline, performing at least:
a) receiving an open service ticket;
b) extracting at least one issue from the open service ticket;
c) identifying a relevant indexed document;
d) extracting all relevant ticket objects from the relevant indexed document using the issue from the open service ticket;
e) dynamically generating a troubleshooting answer list and conversational flow utilizing the relevant ticket objects; and
f) presenting the troubleshooting flow.
